# EUROPEAN PATENT APPLICATION

(11) **EP 4 614 701 A1**
(43) Date of publication of application: **10.09.2025**
(21) Application number: 24865783.5
(22) Date of filing: 09.09.2024
(51) Int. Cl.: H01M 50/242, H01M 50/291

(54) **BATTERY PACK**

(30) Priority: 11.09.2023 KR 20230120261
(71) Applicant: LG Energy Solution, Ltd., Seoul 07335 (KR)
(72) Inventor: SHIN, Ju Hwan, Daejeon 34122 (KR); LEE, Hyoung Suk, Daejeon 34122 (KR); HUR, Nam Hoon, Daejeon 34122 (KR)
(74) Representative: Plasseraud IP
(86) International application number: PCT/KR2024/013582
(87) International publication number: WO 2025/058343

(57) **Abstract**

Disclosed herein relates to a battery pack including: a base plate; a plurality of side walls extending from an upper surface of the base plate in a first direction perpendicular to the upper surface of the base plate; and a plurality of battery devices disposed in a space defined by an upper surface of the base plate and a plurality of side walls, wherein the base plate includes a foam such that the batteries can be protected from external impacts while maintaining a constant temperature of the batteries.

## Description

### [Technical Field]

The present disclosure relates to a battery pack.

This application claims the benefit of priority from Korean Patent Application No. 10-2023-0120261, filed on Sep. 11, 2023, and all of the contents of Korean Patent Application No. 10-2023-0120261 are incorporated by reference into this disclosure.

### [Background]

Unlike primary batteries, secondary batteries can be charged and discharged a plurality of times. Secondary batteries are widely used as an energy source for various wireless devices such as cell phones, laptops, and cordless vacuum cleaners. In recent years, as energy density improvements and economies of scale have dramatically reduced the manufacturing cost of electric hybrid electric vehicles (HEVs), plugin hybrid electric vehicles (PHEVs), and battery electric vehicles (BEVs), and increased the range of BEVs to the same level as fueled vehicles, the primary use of secondary batteries has shifted from mobile devices to mobility.

As secondary batteries are used in mobility, the demand for stability is increasing. Accordingly, there is a need for a battery pack that can protect the secondary battery from external shocks while maintaining a constant temperature of the secondary battery.

### [Summary]

### [Technical Problem]

The problem that the present disclosure seeks to solve is to provide a battery pack that can protect the battery from external shocks while maintaining a constant temperature of the battery.

### [Technical Solution]

To address the above problems, a battery pack is provided according to some embodiments. The battery pack may include: a base plate; a plurality of side walls extending from an upper surface of the base plate in a first direction perpendicular to the upper surface of the base plate; and a plurality of battery devices disposed in a space defined by an upper surface of the base plate and the plurality of side walls, wherein at least one of the base plate and the plurality of side walls comprises a hollow, and wherein a foam may be provided in the hollow.

The base plate may include at least one hollow.

The base plate may be manufactured by an extrusion process.

The base plate may be seamless.

At least one of the plurality of side walls may include foam.

The plurality of side walls may include at least one hollow.

The plurality of side walls may be manufactured by an extrusion process.

The plurality of side walls may be seamless.

The battery pack may further include: a first separation wall interposed between the plurality of battery devices; and a plurality of second separation walls perpendicular to the first separation wall and interposed between the plurality of battery devices, wherein the first separation wall may include foam.

The first separation wall may include at least one hollow.

At least one of the plurality of second separation walls may include foam.

The plurality of second separation walls may include at least one hollow.

The foam may be at least one selected from the group consisting of polyurethane foam and silicone foam.

The battery pack may include: a base plate; a plurality of side walls extending from an upper surface of the base plate in a first direction perpendicular to the upper surface of the base plate; a plurality of battery devices disposed in a space defined by an upper surface of the base plate and a plurality of side walls; and a foam layer disposed on the lower surface of the base plate, wherein the foam layer comprises foam.

The foam may be at least one selected from the group consisting of polyurethane foam and silicone foam.

### [Advantageous Effects]

The battery pack according to the present disclosure can protect the battery from external shocks while maintaining a constant temperature of the battery. Accordingly, the reliability of the battery pack can be improved.

The effects of the present disclosure are not limited to those mentioned above. Those having ordinary skill in the art to which the disclosure belongs will be able to clearly derive and understand effects not mentioned herein.

### [Brief Description of the Drawings]

FIG. 1 is an exploded perspective view to illustrate a battery pack according to some embodiments.
FIG. 2 is a cross-sectional view taken along the cutting line 1A-1A' of FIG. 1.
FIG. 3 is a cross-sectional view taken along cutting line 1B-1B' of FIG. 1.
FIGS. 4 through 7 are cross-sectional views to illustrate a battery pack according to some other embodiments.
FIG. 8 is an exploded perspective view to illustrate a battery pack according to some other embodiments.
FIG. 9 is a cross-sectional view taken along cutting line 8A-8A' of FIG. 8.
FIG. 10 is a cross-sectional view taken along cutting line 8B-8B' of FIG. 8.

### [Best Mode for Carrying out the Invention]

Terms and words used in this specification are not to be construed in their ordinary or dictionary sense, but rather in a sense consistent with the technical idea of the disclosure, based on the principle that the inventor may define the meaning of terms and words as he/she sees fit to best describe his/her disclosure.

It is to be understood that the examples and drawings are merely illustrative of the disclosure and are not intended to be exhaustive of the technical ideas of the disclosure, and that there may be various equivalents and modifications that may be substituted for them at the time of filing the present disclosure.

In describing the disclosure, specific descriptions of known configurations or features are omitted where it is believed that such detailed description would obscure the essence of the disclosure.

The drawings are provided to more fully illustrate the present disclosure to those of ordinary skill in the art, and the shapes, sizes, and numbers of components in the drawings may be exaggerated, omitted, or shown schematically for clarity. Accordingly, the shapes, sizes, proportions, and numbers of components in the drawings do not necessarily reflect the actual shapes, sizes, proportions, and numbers of each component.

Hereinafter, examples of the present disclosure will be described in detail with reference to the drawings.

### [First embodiment]

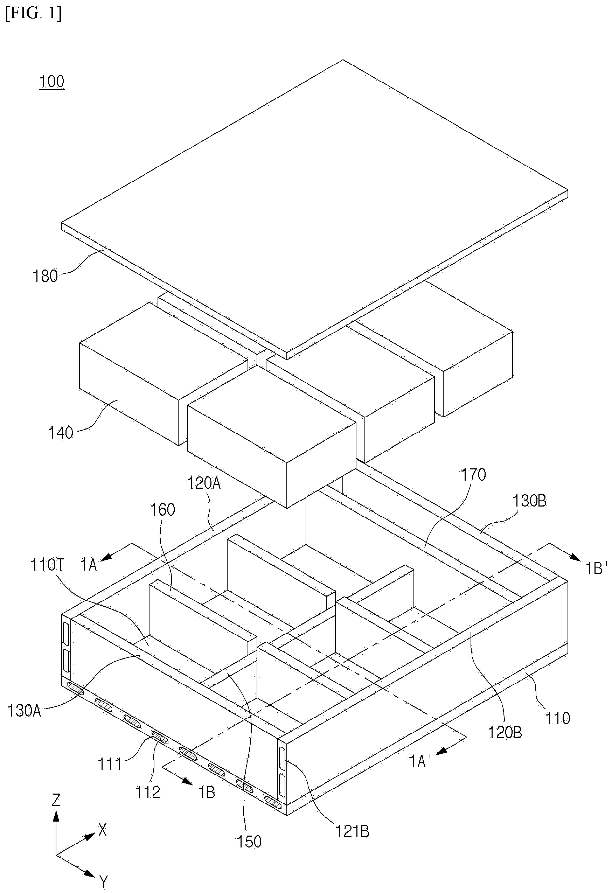

FIG. 1 is an exploded perspective view to illustrate a battery pack according to some embodiments.

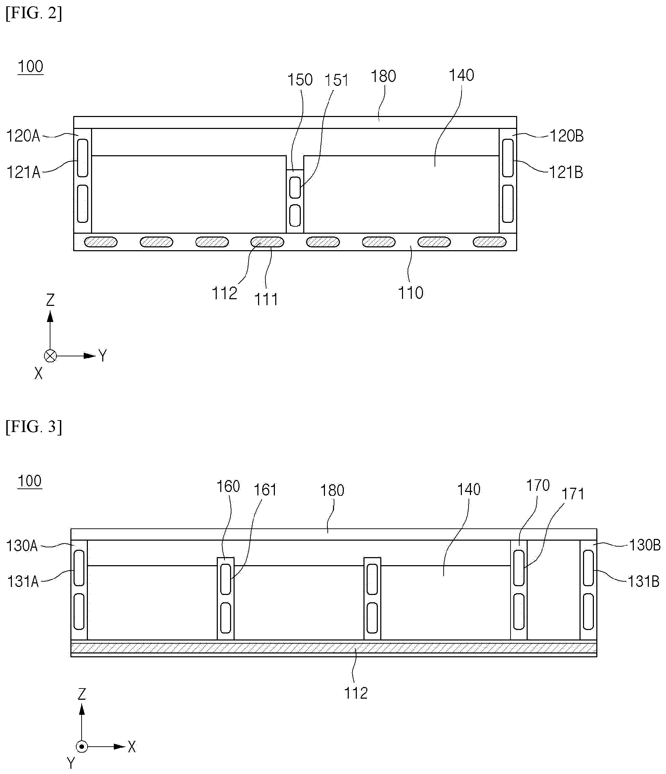

FIG. 2 is a cross-sectional view taken along the cutting line 1A-1A' of FIG. 1.

FIG. 3 is a cross-sectional view taken along cutting line 1B-1B' of FIG. 1.

Referring to FIGS. 1 through 3, the battery pack 100 may include a base plate 110, a plurality of side walls 120A, 120B, 130A, 130B, a plurality of battery devices 140, a first separation wall 150, a plurality of second separation walls 160, an electric parts separation wall 170, and a lid 180. The battery pack 100 may be the final form of a battery system mounted on a mobility or the like.

Hereinafter, two directions substantially parallel to the upper surface 110T of the base plate 110 are defined as the X-axis direction and the Y-axis direction, respectively, and a direction substantially perpendicular to the upper surface 110T of the base plate 110 is defined as the Z-axis direction. The X-axis direction, the Y-axis direction, and the Z-axis direction may be substantially perpendicular to each other.

The base plate 110 may support a plurality of side walls 120A, 120B, 130A, 130B, a plurality of battery devices 140, a first separation wall 150, a plurality of second separation walls 160, and an electric parts separation wall 170.

In some embodiments, the base plate 110 may include at least one hollow 111. The hollow 111 may be exposed to the outside of the base plate 110. The hollow 111 may extend in an X-axis direction from a side surface of the base plate 110. The extending direction of the hollow 111 may be substantially perpendicular to the Y-axis direction. As a non-limiting example, the shape of the hollow 111 may be a rounded square column, a rectangular column, a circular column, or an elliptical column. The base plate 110 may include two or more of the hollows 111. The plurality of hollows 111 may be substantially parallel to each other. Each of the plurality of hollows 111 may have a different shape. The plurality of hollows 111 may all have the same shape. The volume of each of the plurality of hollows 111 may be different.

In some embodiments, the base plate 110 may be manufactured by an extrusion process. As a non-limiting example, the extrusion process may be a direct extrusion process or an indirect extrusion process. In some embodiments, the material of the base plate 110 may be aluminum or an alloy including aluminum. The hollow 111 of the base plate 110 described above may be formed by an extrusion process.

In some embodiments, the base plate 110 may be seamless. The base plate 110 may be seamless as it is manufactured by the extrusion process described above. As used herein, "seamless" may mean that the hollow 111 of the base plate 110 has no joint parts or bonding line.

In some embodiments, the base plate 110 may include a foam 112. The foam 112 may be disposed in at least one of the plurality of hollows 111 of the base plate 110. The volume of the foam 112 may be substantially the same as the volume of the hollow. 111 The volume of the foam 112 may be smaller than the volume of the hollow 111.

In some embodiments, the foam 112 can be one or more selected from the group consisting of polyurethane foam and silicone foam.

As the foam 112 is included in the base plate 110, the plurality of battery devices 140 can be protected from external impact by the foam 112 absorbing the impact, even if an impact occurs at the lower part of the battery pack 100. As the foam 112 is included in the base plate 110, it can block the transfer of heat between the interior and exterior of the battery pack 100, thereby maintaining a constant temperature of the plurality of battery devices 140.

As a non-limiting example, the base plate 110 may include cooling flow paths (not shown). By including cooling flow paths in the base plate 110, even if a thermal runaway event occurs in the battery device 140, the coolant flowing in the cooling flow paths can absorb the heat and prevent the spread of the thermal runaway event to neighboring battery devices 140.

A plurality of side walls 120A, 120B, 130A, 130B may extend in the Z-axis direction from the upper surface 110T of the base plate. For ease of description herein, the side walls 120A and 120B extending in the X-axis direction are referred to as the first side walls 120A, 120B, and the side walls 130A and 130B extending in the Y-axis direction are referred to as the second side walls 130A, 130B. The first side walls 120A, 120B and second side walls 130A, 130B may protect a plurality of battery devices 140, a first separation wall 150, a plurality of second separation walls 160, and an electric parts separation wall 170.

The first side walls 120A, 120B may be substantially parallel to the X-axis direction and substantially perpendicular to the Y-axis direction. The second side walls 130A, 130B may be substantially parallel to the Y-axis direction and substantially perpendicular to the X-axis direction. The first side walls 120A, 120B can be substantially perpendicular to the second side walls 130A, 130B. The first side walls 120A, 120B may extend in the Z-axis direction from a long side region of the upper surface 110T of the base plate. The second side walls 130A, 130B may extend in the Z-axis direction from a short side region of the upper surface 110T of the base plate.

In some embodiments, the first side wall 120A may include at least one hollow 121A. The hollow 121A may be exposed to the outside of the first side wall 120A. The first side wall 120A may include a separate hollow (not shown) communicating with the hollow 121A and exposed to the outside of the first side wall 120A. The hollow 121A may extend in the X-axis direction from a side surface of the first side wall 120A. The extending direction of the hollow 121A may be substantially perpendicular to the Y-axis direction. As a non-limiting example, the shape of the hollow 121A may be a rounded square column, a rectangular column, a circular column, or an elliptical column. The first side wall 120A may include two or more of the hollows 121A. The plurality of hollows 121A may be substantially parallel to each other. Each of the plurality of hollows 121A may have a different shape. The plurality of hollows 121A may all have the same shape. The volume of each of the plurality of hollows 121A can be different. In some embodiments, the first side wall 120B may include at least one hollow 121B. The hollows 121B may be substantially the same as the hollows 121A, and therefore, redundant description of them is omitted.

In some embodiments, the second side wall 130A may include at least one hollow 131A. The second side wall 130A may include a separate hollow (not shown) that is in communication with the hollow 131A and exposed to the outside of the second side wall 130A. Accordingly, the hollow 131A may be exposed to the outside of the second side wall 130A. The hollow 131A may extend in the Y-axis direction from the side surface of the second side wall 130A. The extending direction of the hollow 131A may be substantially perpendicular to the X-axis direction. As a non-limiting example, the shape of the hollow 131A may be a rounded square column, a rectangular column, a circular column, or an elliptical column. The second side wall 130A may include two or more of the hollow 131A. The plurality of hollows 131A may be substantially parallel to each other. Each of the plurality of hollows 131A may have a different shape. The plurality of hollows 131A may all have the same shape. The volume of each of the plurality of hollows 131A may be different. In some embodiments, the second side wall 130B may include at least one hollow 131B. The hollows 131B may be substantially the same as the hollows 131A, and therefore, redundant description of them is omitted.

In some embodiments, the first side walls 120A, 120B and the second side walls 130A, 130B may be manufactured by an extrusion process. As a non-limiting example, the extrusion process may be a direct extrusion process or an indirect extrusion process. In some embodiments, the material of the first side walls 120A, 120B and the second side walls 130A, 130B may be aluminum or an alloy including aluminum. The hollows 131A, 131B of the first side walls 120A, 120B and second side walls 130A, 130B described above may be formed by an extrusion process.

In some embodiments, the first side walls 120A, 120B and second side walls 130A, 130B may be seamless. The first side walls 120A, 120B and second side walls 130A, 130B may be seamless as they are manufactured by the extrusion process described above.

As a non-limiting example, the first side walls 120A, 120B and the second side walls 130A, 130B may include cooling flow paths (not shown). By including cooling flow paths in the first side walls 120A, 120B and second side walls 130A, 130B, even if a thermal runaway event occurs in the battery device 140, the coolant flowing in the cooling flow paths can absorb the heat and prevent the spread of the thermal runaway event to neighboring battery devices 140.

In some exemplary embodiments, the second side wall 130B may include a plurality of vent holes (not shown). The plurality of vent holes may be configured to provide a pathway for exhausting gases, heat, and vaporized coolant within the battery pack 100.

The plurality of battery devices 140 may be configured to store energy. As a non-limiting example, each of the plurality of battery devices 140 may be a cell unit including a plurality of battery cells. Each of the plurality of battery devices 140 may not include a module frame. The assembly method of mounting the cell units into a battery pack may be referred to as cell to pack method. A battery pack assembled with a cell to pack method may be referred to as a module-less type of battery pack.

As a non-limiting example, each of the plurality of battery devices 140 may be a battery module. A battery module includes a cell unit including a plurality of battery cells and a module frame in which the cell unit is mounted. The assembly method of mounting the cell unit to a module frame having at least one open side and mounting the module frame to a battery pack is referred to as cell to module to pack method.

Each of the plurality of battery cells may be a secondary battery. Each of the plurality of battery cells may be a lithium secondary battery. Each of the plurality of battery cells may be any one of a lithium-ion battery, a lithium-ion polymer battery, a lithium metal battery, and a lithium polymer battery.

The shape of each of the plurality of battery cells may be any one of cylindrical, prismatic, and pouch-type. The shape of the battery cells refers to the shape of the battery case.

The first separation wall 150 and the plurality of second separation walls 160 may isolate the plurality of battery devices 140 and the plurality of electric parts (not shown) from each other. Accordingly, the first separation wall 150 and the plurality of second separation walls 160 can protect the plurality of battery devices 140 and the plurality of electric parts (not shown) while preventing short circuits between them.

The first separation wall 150 may be interposed between the plurality of battery devices 140. The first separation wall 150 may extend in the X-axis direction. The first separation wall 150 may extend between the second side wall 130A and the electric parts separation wall 170. The first separation wall 150 may abut each of the second side wall 130A and the electric parts separation wall 170. Each of the plurality of second separation walls 160 may be interposed between the plurality of battery devices 140. Each of the plurality of second separation walls 160 may extend in the Y-axis direction. Each of the plurality of second separation walls 160 may extend between the first separation wall 150 and one of the first side walls 120A, 120B. Each of the plurality of second separation walls 160 may abut each of the first separation wall 150 and one of the first side walls 120A, 120B.

In some embodiments, the first separation wall 150 may include at least one hollow 151. The first separation wall 150 may include a separate hollow (not shown) that is in communication with the hollow 151 and exposed to the outside of the first separation wall 150. Accordingly, the hollow 151 may be exposed to the outside of the first separation wall 150. The hollow 151 may extend in the X-axis direction from a side surface of the first separation wall 150. The extending direction of the hollow 151 may be substantially perpendicular to the Y-axis direction. As a non-limiting example, the shape of the hollow 151 may be a rounded square column, a rectangular column, a circular column, or an elliptical column. The first separation wall 150 may include two or more of the hollow 151. The plurality of hollows 151 may be substantially parallel to each other. Each of the plurality of hollows 151 may have a different shape. The plurality of hollows 151 may all have the same shape. The volume of each of the plurality of hollows 151 may be different.

In some embodiments, each of the plurality of second separation walls 160 may include at least one hollow 161. Each of the plurality of second separation walls 160 may include a separate hollow (not shown) that is in communication with the hollow 161 and exposed to the outside of each of the plurality of second separation walls 160. Accordingly, the hollow 161 may be exposed to the outside of the second separation wall 160. The hollow 161 may extend in the Y-axis direction from a side surface of each of the plurality of second separation walls 160. The extending direction of the hollow 161 may be substantially perpendicular to the X-axis direction. As a non-limiting example, the shape of the hollow 161 may be a rounded square column, a rectangular column, a circular column, or an elliptical column. Each of the plurality of second separation walls 160 may include two or more hollows 161. The plurality of hollows 161 may be substantially parallel to each other. Each of the plurality of hollows 161 may have a different shape. The plurality of hollows 161 may all have the same shape. The volume of each of the plurality of hollows 161 may be different.

In some embodiments, the first separation wall 150 and the plurality of second separation walls 160 may be manufactured by an extrusion process. As a non-limiting example, the extrusion process may be a direct extrusion process or an indirect extrusion process. In some embodiments, the material of the first separation wall 150 and the plurality of second separation walls 160 may be aluminum or an alloy including aluminum. The hollows 151, 161 of the first separation wall 150 and the plurality of second separation walls 160 may be formed by an extrusion process.

In some embodiments, the first separation wall 150 and the plurality of second separation walls 160 may be seamless. The first separation wall 150 and the plurality of second separation walls 160 may be seamless as they are manufactured by the extrusion process described above.

The electric parts separation wall 170 may extend in the Y-axis direction. The electric parts separation wall 170 may extend between the first side walls 120A, 120B. The electric parts separation wall 170 may abut each of the first side walls 120A, 120B. The electric parts separation wall 170 may isolate a plurality of electric parts (not shown) from the plurality of battery devices 140. The electric parts separation wall 170 may be interposed between the plurality of electric parts (not shown) and the plurality of battery devices 140.

In some embodiments, the electric parts separation wall 170 may include at least one hollow 171. The electric parts separation wall 170 may include a separate hollow (not shown) that is in communication with the hollow 171 and exposed to the outside of the electric parts separation wall 170. Accordingly, the hollow 171 may be exposed to the outside of the electric parts separation wall 170. The hollow 171 may extend in the Y-axis direction from a side surface of the electric parts separation wall 170. The extending direction of the hollow 171 may be substantially perpendicular to the X-axis direction. As a non-limiting example, the shape of the hollow 171 may be a rounded square column, a rectangular column, a circular column, or an elliptical column. The electric parts separation wall 170 may include two or more hollows 171. The plurality of hollows 171 may be substantially parallel to each other. Each of the plurality of hollows 171 may have a different shape. The plurality of hollows 171 may all have the same shape. The volume of each of the plurality of hollows 171 may be different.

In some embodiments, the electric parts separation wall 170 may be manufactured by an extrusion process. As a non-limiting example, the extrusion process may be a direct extrusion process or an indirect extrusion process. As a non-limiting example, the material of the electric parts separation wall 170 may be aluminum or an alloy including aluminum. The hollow 171 of the electric parts separation wall 170 may be formed by an extrusion process.

In some embodiments, the electric parts separation wall 170 may be seamless. The electric parts separation wall 170 may be seamless as it is manufactured by the extrusion process described above.

As a non-limiting example, the battery pack 100 may include a plurality of electric parts (not shown). The plurality of electric parts (not shown) may be disposed in the space defined by the upper surface 110T of the base plate, the first side walls 120A, 120B, the electric parts separation wall 170, and the second side wall 130B. The plurality of electric parts (not shown) may include any electronic devices required to drive the battery pack.

The lid 180 may be coupled to the first side walls 120A, 120B and the second side walls 130A, 130B. As a non-limiting example, the lid 180 may be fixed to the first side walls 120A, 120B and second side walls 130A, 130B by mechanical coupling means, such as bolts. The lid 180 may cover a plurality of battery devices 140, a first separation wall 150, a plurality of second separation walls 160, an electric parts separation wall 170, and a plurality of electric parts (not shown). The shape of the lid 180 may be a flat plate.

### [Second Embodiment]

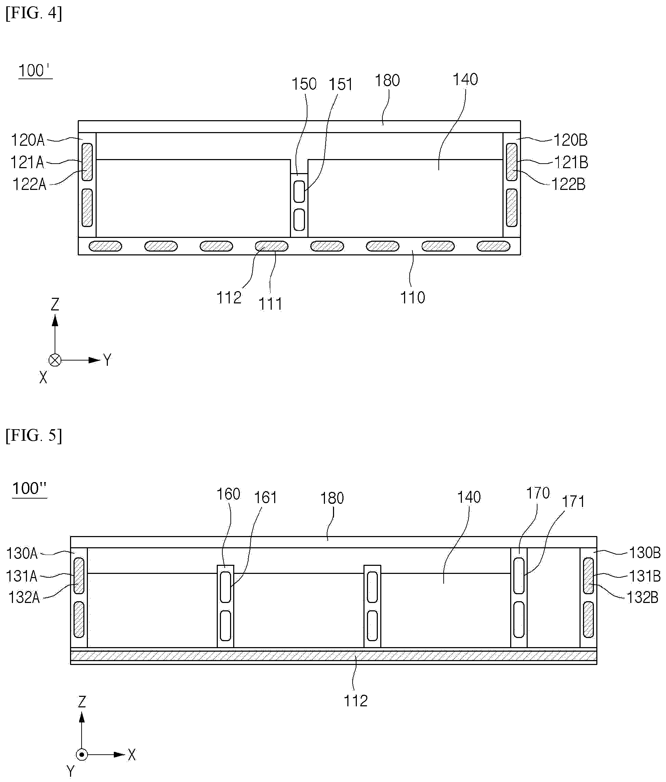

FIG. 4 is a cross-sectional view to illustrate a battery pack 100' according to some other embodiments.

The second embodiment is described only where it differs from the first embodiment.

Referring to FIG. 4, in some embodiments, the first side walls 120A, 120B may include foam 122A, 122B. In some embodiments, the foam 122A, 122B may be disposed in at least one of the hollows 121A, 121B of the first side walls 120A, 120B. The volume of the foam 122A, 122B may be substantially the same as the volume of the hollows 121A, 121B. The volume of the foam 122A, 122B may be smaller than the volume of the hollows 121A, 121B.

### [Third embodiment]

FIG. 5 is a cross-sectional view to illustrate a battery pack 100" according to some other embodiments.

The third embodiment is described only where it differs from the first embodiment.

Referring to FIG. 5, in some embodiments, the second side walls 130A, 130B may include foam 132A, 132B. In some embodiments, the foam 132A, 132B may be disposed in at least one of the hollows 131A, 131B of the second side walls 130A, 130B. The volume of the foam 132A, 132B may be substantially the same as the volume of the hollows 131A, 131B. The volume of the foam 132A, 132B may be smaller than the volume of the hollows 131A, 131B.

### [Fourth embodiment]

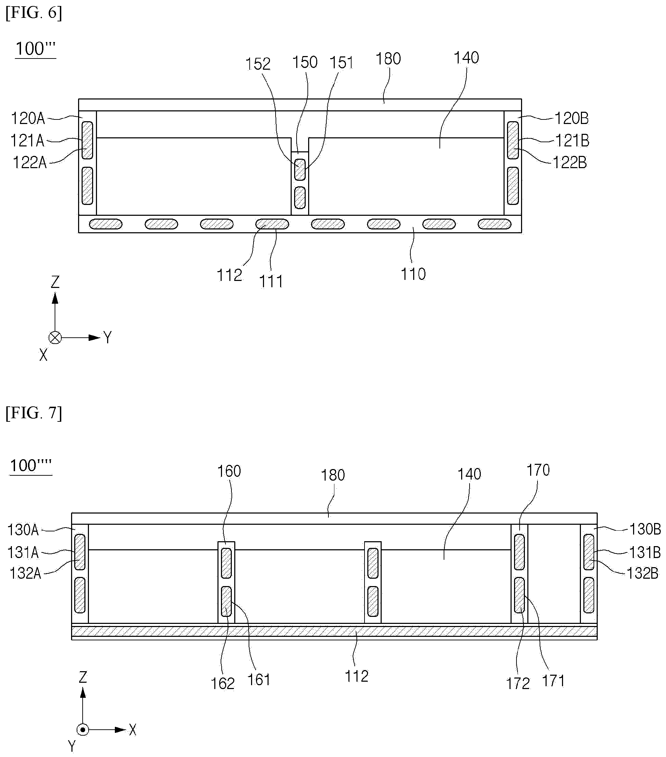

FIG. 6 is a cross-sectional view to illustrate a battery pack 100‴ according to some other embodiments.

The fourth embodiment is described only where it differs from the second embodiment.

Referring to FIG. 6, in some embodiments, the first separation wall 150 may include foam 152. In some embodiments, the foam 152 may be disposed in at least one hollow 151 of the first separation wall 150. The volume of the foam 152 may be substantially the same as the volume of the hollow 151. The volume of the foam 152 may be smaller than the volume of the hollow 151.

### [Fifth embodiment]

FIG. 7 is a cross-sectional view to illustrate a battery pack 100ʺʺ according to some other embodiments.

The fifth embodiment is described only where it differs from the third embodiment.

Referring to FIG. 7, in some embodiments, the plurality of second separation walls 160 may include foam 162. In some embodiments, the foam 162 may be disposed in at least one hollow 161 of the plurality of second separation walls 160. The volume of the foam 162 may be substantially the same as the volume of the hollow 161. The volume of the foam 162 may be smaller than the volume of the hollow 161.

In some embodiments, the electric parts separation wall 170 may include foam 172. In some embodiments, the foam 172 may be disposed in at least one hollow 171 of the electric parts separation wall 170. The volume of the foam 172 may be substantially the same as the volume of the hollow 171. The volume of the foam 172 may be smaller than the volume of the hollow 171.

### [Sixth embodiment]

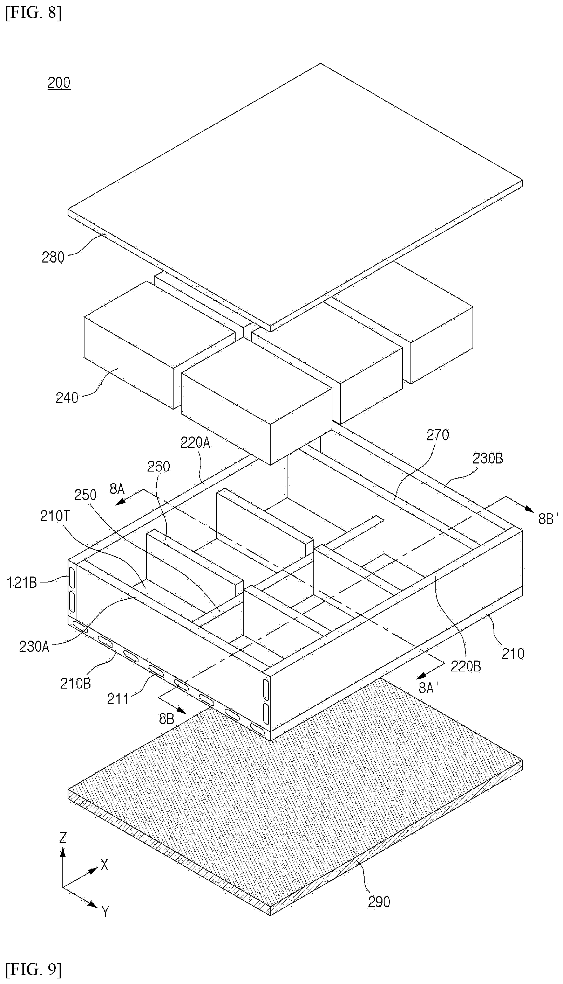

FIG. 8 is an exploded perspective view to illustrate a battery pack 200 according to some other embodiments.

FIG. 9 is a cross-sectional view taken along the cutting line 8A-8A' of FIG. 8.

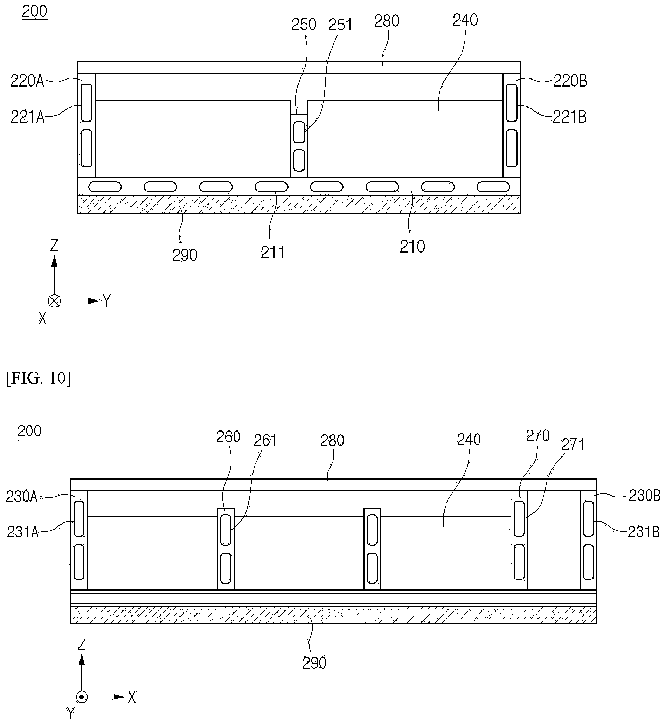

FIG. 10 is a cross-sectional view taken along cutting line 8B-8B' of FIG. 8.

The sixth embodiment is described only where it differs from the first embodiment.

In some embodiments, a foam layer 290 including foam may be disposed on the lower surface 210B of the base plate. In this case, the base plate 210 may not include the foam 212.

The above description is intended only to illustrate the disclosure by way of example. The scope of rights of the disclosure shall be construed in accordance with the claims, and all technical ideas within the same or equivalent scope shall be construed to be included in the scope of rights of the disclosure.

## Claims

1. A battery pack comprising:
a base plate;
a plurality of side walls extending from an upper surface of the base plate in a first direction perpendicular to the upper surface of the base plate; and
a plurality of battery devices disposed in a space defined by an upper surface of the base plate and the plurality of side walls,
wherein at least one of the base plate and the plurality of side walls comprises a hollow, and
wherein a foam is provided in the hollow.

2. The battery pack of claim 1,
wherein the base plate comprises at least one hollow.

3. The battery pack of claim 1,
wherein the base plate is manufactured by an extrusion process.

4. The battery pack of claim 1,
wherein the base plate is seamless.

5. The battery pack of claim 1,
wherein at least one of the plurality of side walls comprises foam.

6. The battery pack of claim 1,
wherein the plurality of side walls comprises at least one hollow.

7. The battery pack of claim 1,
wherein the plurality of side walls is manufactured by an extrusion process.

8. The battery pack of claim 1,
wherein the plurality of side walls is seamless.

9. The battery pack of claim 1, further comprising:
a first separation wall interposed between the plurality of battery devices; and
a plurality of second separation walls perpendicular to the first separation wall and interposed between the plurality of battery devices,
wherein the first separation wall comprises foam.

10. The battery pack of claim 9,
wherein the first separation wall comprises at least one hollow.

11. The battery pack of claim 9,
wherein at least one of the plurality of second separation walls comprises foam.

12. The battery pack of claim 9,
wherein the plurality of second separation walls comprise at least one hollow.

13. The battery pack of claim 1,
wherein the foam is at least one selected from the group consisting of polyurethane foam and silicone foam.

14. A battery pack comprising:
a base plate;
a plurality of side walls extending from an upper surface of the base plate in a first direction perpendicular to the upper surface of the base plate; and
a plurality of battery devices disposed in a space defined by an upper surface of the base plate and the plurality of side walls;
and a foam layer disposed on the lower surface of the base plate,
wherein the foam layer comprises foam.

15. The battery pack of claim 14,
wherein the foam is at least one selected from the group consisting of polyurethane foam and silicone foam.
